# EUROPEAN PATENT SPECIFICATION

(11) **EP 4 353 530 B1**
(45) Date of publication and mention of the grant of the patent: **18.02.2026**
(21) Application number: 23203604.6
(22) Date of filing: 13.10.2023
(51) Int. Cl.: B60N 2/28

(54) **CAR SEATS**
FAHRZEUGSITZ
SIÈGES DE VOITURE

(30) Priority: 13.10.2022 GB 202215159
(43) Date of publication of application: 17.04.2024
(73) Proprietor: Icandy World Limited, Bedfordshire SG18 8UB (GB)
(72) Inventor: Walker, Paul, Biggleswade, SG18 8UB (GB); Griffiths, Ryan, Biggleswade, SG18 8UB (GB); Barker, Derrick, Pershore, WR10 2NU (GB); Carter, Chris, Pershore, WR10 2NU (GB); Chick, Greg, Pershore, WR10 2NU (GB)
(74) Representative: Barker Brettell LLP

(56) References cited:
- CN-A- 113 306 464
- CN-B- 113 306 464
- US-A1- 2016 144 749

## Description

This invention relates to car seats.

The use of car seats to support children in cars and other passenger vehicles (including busses, coaches, campervans, motorhomes, recreational vehicles ("RVs") trains, planes and so on) is not only well known, but mandated by law in many territories. Such car seats restrain children too small to be restrained by the vehicle's fitted occupant restraint systems, such as seatbelts designed for adults, and also act to absorb kinetic energy in the case of a crash, thus protecting the occupant.

For very young children - infants less than 9 months old - there are competing desiderata when it comes to safety and ergonomics. The infant child must be kept safe, but ideally for the child's comfort and to promote healthy growth, a near horizontal and ergonomic posture is desirable, which has not always been possible with prior art infant car seats.

We are aware of:
- US2016/144749, which discloses a raising mechanism for a child safety seat including a base and a backrest disposed on the base. The raising mechanism includes a front raising block, a rear raising block, and a driving member. A front end of the front raising block is connected to the base. A rear raising block is connected to the front raising block. The front raising block and the rear raising block form a seating portion cooperatively. The driving member is movably disposed on the base or the backrest. The driving member drives the front raising block and the rear raising block to raise the seating portion.
- CN 113 306 464, which discloses a child safety seat which comprises a base, a backrest located in the rear portion of the base and a head support capable of being arranged on the backrest in a sliding mode in the vertical direction. The child safety seat further comprises a back cushion assembly and a linkage mechanism, the back cushion assembly can be arranged on the backrest in a telescopic and rotatable mode, the linkage mechanism drives the back cushion assembly to rotate and extend relative to the backrest when the head support slides downwards relative to the backrest, and the linkage mechanism is arranged between the head support and the back cushion assembly, and is connected or matched with the head support and the back cushion assembly respectively.

According to a first aspect of the invention, we provide a car seat for an infant child, comprising
a body having walls and a base, the walls surrounding an upper surface of the base;
a sliding member slidable relative to the upper surface;
a head rest assembly comprising a headrest mounted through a pivoting mounting on the sliding member and a backrest extending from the headrest, with the headrest and the backrest each having a surface, the surfaces forming a continuous surface for the infant child to lay upon; and
a wedge arranged to fit between the back rest and the upper surface, in which when fitted between the back rest and the upper surface, as the sliding member slides on the upper surface, the wedge drives the head reset assembly to pivot about the pivoting mounting, so as to change an inclination of the continuous surface.

As such, this allows the angle of a continuous surface to be changed, such that the infant child can have a flat surface that can be inclined to different angles. In particular, this may allow the continuous surface to be positioned as close to horizontal as is possible within the car seat.

The headrest may comprise a pair of wings positioned either side of the continuous surface. The wings may provide support to the infant child's head. As such, they will slide and pivot with the head rest assembly.

Typically, the headrest will be mounted through the pivoting mounting at an upper end of the headrest, and the backrest will extend from an opposite, lower end of the headrest. The backrest may have an upper end at which it joins the headrest, and an opposite, lower end furthest from the backrest.

The car seat may comprise a restraint for the infant child, which may comprise a plurality of straps and buckles. Typically, there will be a crotch strap extending from adjacent to the lower end of the backrest and joining shoulder straps which act to restrain the shoulders and torso of the infant child in use. The continuous surface may therefore extend from the upper end of the headrest to the lower end of the backrest.

The sliding member may be restricted to slide along only one direction; typically, this direction will be a front to back direction of the car seat. The car seat may comprise an indexing mechanism which allows the sliding member to lock at spaced apart discrete points; this allows the position of the infant child to be secure, but adjustable.

The wedge may have a flat surface which abuts the backrest and a curved surface which abuts the upper surface. This allows the wedge to accommodate for pivoting motion of the backrest due to the sliding motion of the sliding member.

In at least one position of the sliding member, the flat surface of the wedge may extend past the lower end of the backrest to provide an extension to the continuous surface.

The car seat may have a first state in which the wedge is fitted between the backrest and the upper surface; this provides adjustment of inclination of the continuous surface. The car seat may also have a state where the wedge is not fitted between the backrest and the upper surface, in which case the backrest will lay against the upper surface. Typically, the second state will provide a more upright sitting position (for when the infant child is awake or old enough to at least partially support themselves) and the first state will provide a more recumbent laying position.

There now follows, by way of example only, description of an embodiment of the invention, described with reference to the accompanying drawings, in which:
Figure 1 shows a perspective view of an infant car seat in accordance with an embodiment of the invention in a first state;
Figure 2 shows a cross sectional view of the infant car seat of Figure 1 in the first state with an infant child in place;
Figure 3 shows a perspective view of the infant car seat of Figure 1 in a second state;
Figure 4 shows a cross sectional view of the infant car seat of Figure 1 in the second state, with an infant child in place; and
Figures 5 and 6 show perspective, partially cut-away views of the sliding and indexing mechanism of the infant car seat of Figure 1.

An infant car seat 1 for an infant child in accordance with a first embodiment of the invention is shown in the accompanying drawings. Broadly speaking, it comprises a set of walls 2 surrounding a base 3 having an upper surface 4. The walls 2 and the base 3 define a void 5 in which an infant child can be placed.

The car seat 1 also comprises a head rest assembly 6. This comprises a sliding member 7 which can slide relative to the base 3 along a forwards/backwards axis of the car seat 1. The head rest assembly also comprises a pivoting mounting 8 through which a headrest 9 is mounted on the sliding member 7. The headrest 9 comprises a surface 10 on which the infant child can lay and two wings 11 either side of the surface 10 to support an infant child's head.

Whilst the headrest 9 is connected to the pivoting mounting 8 a first, upper end 12 of the headrest 9, at a second, opposite, lower end 13 of the headrest 9 there is provided a backrest 14. This comprises a further surface 15 to support the infant child. The surfaces 10 and 15 provide a generally continuous surface for the infant child to lay upon.

There is also provided a wedge 16 positioned between the upper surface 4 and the backrest 14. This has a flat upper surface 17 and a curved bottom surface 18. The flat upper surface provides an extension to the continuous surface formed by surfaces 10 and 15. The curved bottom surface 18 accommodates for the headrest 9 and backrest 14 pivoting about the pivoting mounting 8 by rotating relative to the base 3, thus ensuring that the wedge can continue to operate as an extension of the continuous surface as the backrest 14 and headrest 9 pivot.

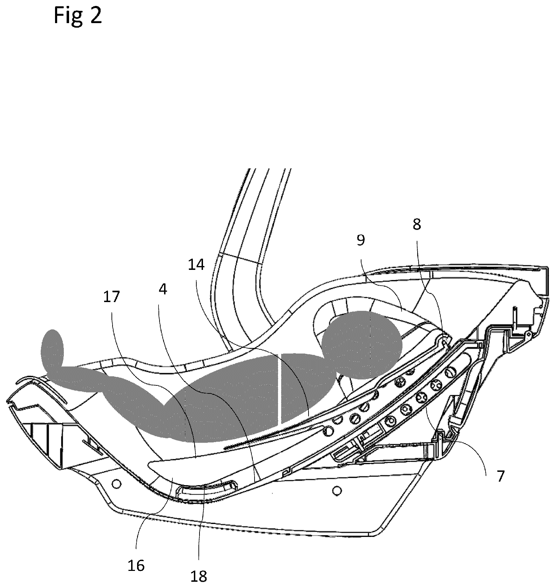

Thus, as the sliding member 7 slides along the forwards/backwards direction, that will drive the headrest 9 and backrest 14 linearly over the upper surface 4. Because the headrest is pivotally mounted on the sliding member, as the backrest is pushed further over the wedge 16, the wedge 16 will drive the backrest 14 and headrest 9 to pivot; in the case of sliding downwards (i.e. in the direction from the head to toes of the infant child, and so to the left in Figure 2) that will cause the headrest 9 and backrest 14 to pivot upwards, closer to horizontal.

As such, there therefore provided a continuous surface that can approach horizontal on which an infant child can lay; as can be seen in the Figures, this can extend from the first end 12 of the headrest 9 to where a crotch strap 16 of a restraining system for the infant child extends from the base 3. This is likely to be more ergonomically appropriate for a very young infant child than laying on various non-continuous surfaces. By adjusting the position of the sliding member 7, the degree of inclination of that continuous surface can be varied along with the position of the headrest 9 to allow for different sized children, and to accommodate for a child's growth.

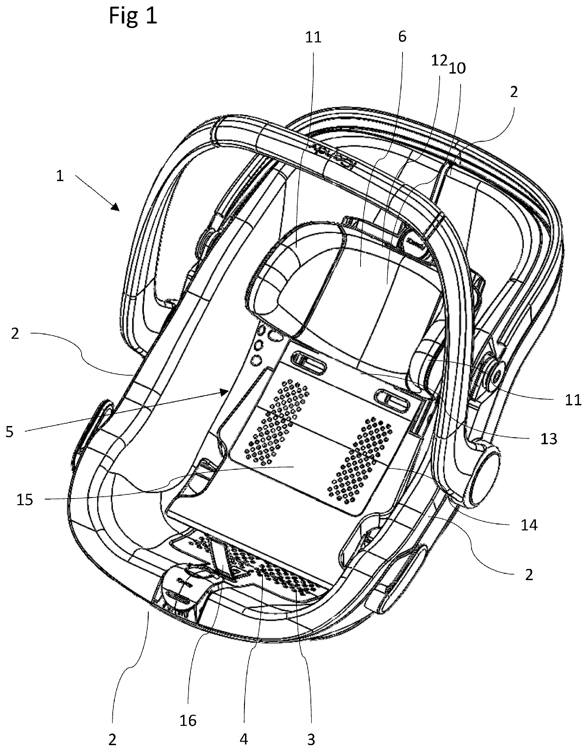

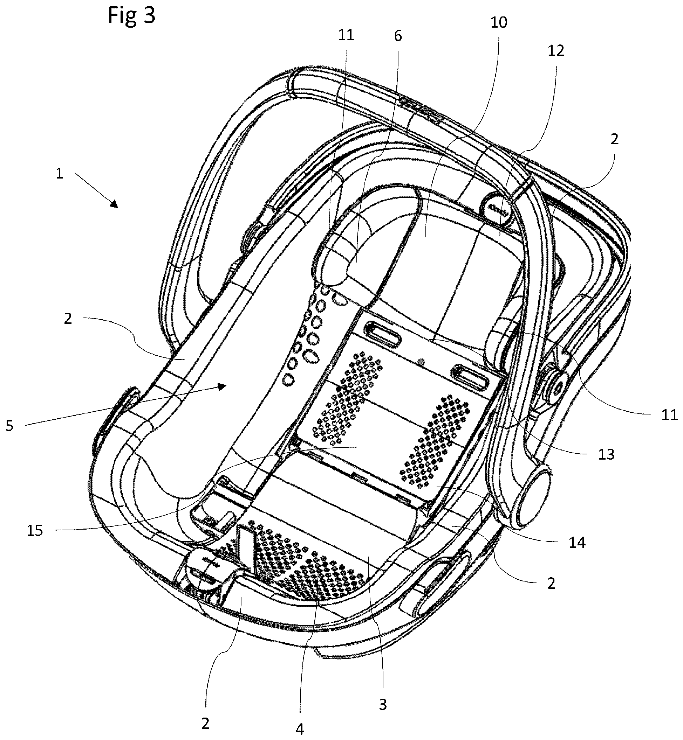

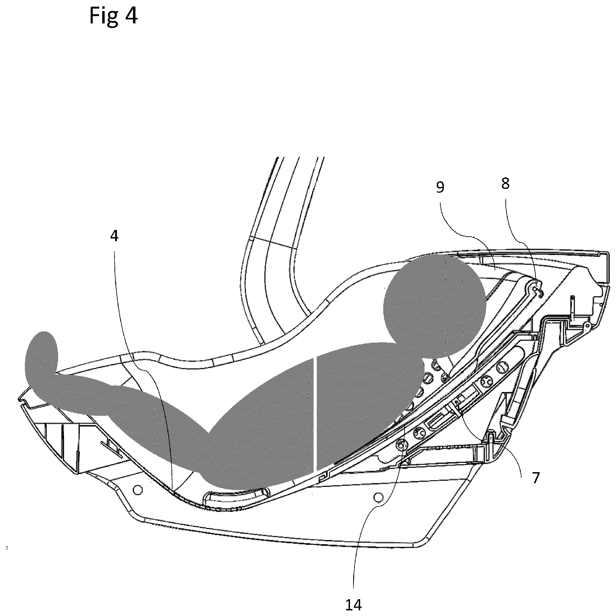

Whilst Figures 1 and 2 of the accompanying drawings discussed above show the car seat 1 in a first state, the car seat 1 also has a second state shown in Figures 3 and 4 of the accompanying drawings. In this second state, the wedge 16 is removed. As such, the headrest 9 and backrest 14 will follow the upper surface 4 as the sliding member 7 is moved. This provides a more upright position for the infant child, suitable for older infants more able to support themselves, and when the child is awake rather than sleeping.

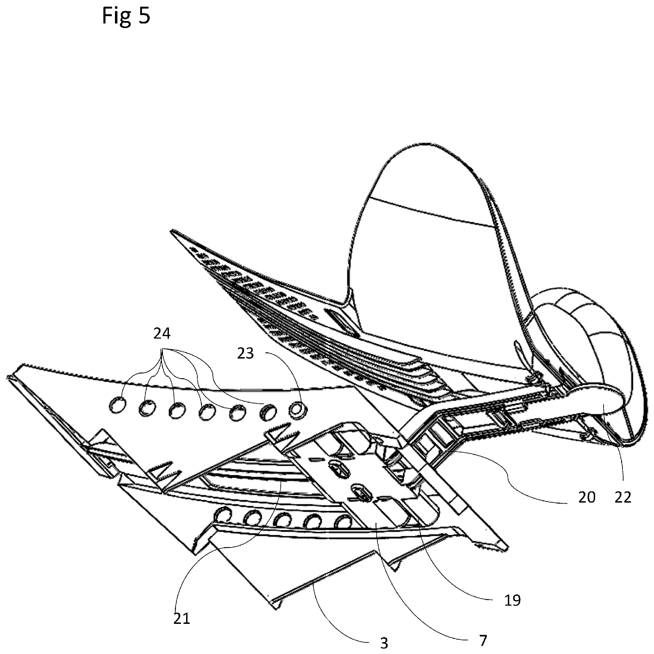

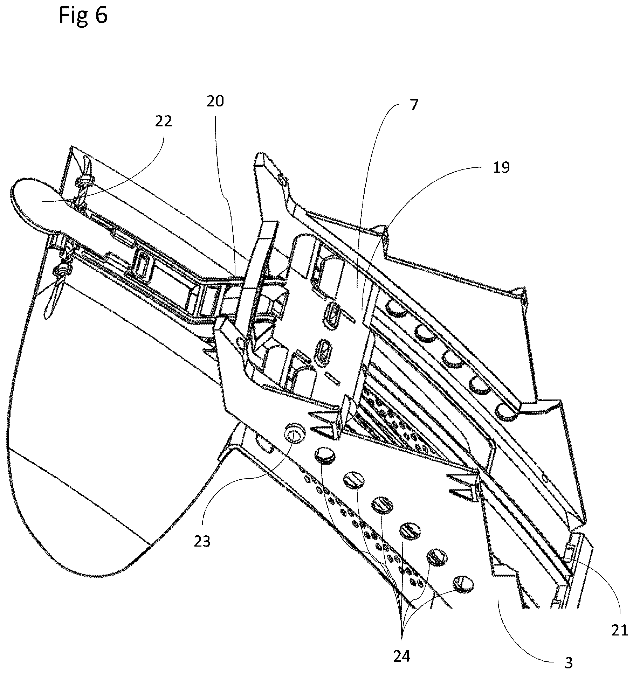

The functioning of the sliding member 7 relative to the base 3 can be seen in more detail in Figures 5 and 6 of the accompanying drawings. Here, the sliding member 7 comprises a captive part 19 below the upper surface 4, and a protruding part 20 which extends through a slot 21 in the base 3. The protruding part is provided with a lever 22 which, when pressed by a user (typically a parent or carer of the infant child) withdraws bolts 23 from apertures 24 in the base 2. The apertures 24 are evenly spaced along the slot 21.

As such, the user wanting to adjust the position (and, in the first state, the inclination) of the headrest 9 and backrest 14 would press lever 22 to withdraw bolts 23 and then slide the sliding member. When they released the lever 22, the bolts would engage an aperture 24 if it were adjacent; if not the user would slide the sliding member 7 until the bolts 23 reengage and the sliding member 7 is locked against further sliding until the lever 22 is once more pressed. As such, the apertures 24 act to index the positions that the sliding member 7 can be locked in.

## Claims

1. A car seat (1) for an infant child, comprising
a body having walls (2) and a base (3), the walls (2) surrounding an upper surface (4) of the base (3);
a sliding member (7) slidable relative to the upper surface (4);
a head rest assembly (6) comprising a headrest (9) mounted through a pivoting mounting (8) on the sliding member (7) and a backrest (14) extending from the headrest (9), with the headrest (9) and the backrest (14) each having a surface (10, 15), the surfaces (10, 15) forming a continuous surface for the infant child to lay upon; **characterized by** further comprising
a wedge (16) arranged to fit between the backrest (14) and the upper surface (4), in which when fitted between the backrest (14) and the upper surface (4), as the sliding member (7) slides on the upper surface (4), the wedge (16) drives the head rest assembly (6) to pivot about the pivoting mounting (8), so as to change an inclination of the continuous surface (10, 15).

2. The car seat (1) of claim 1, in which the headrest (9) comprises a pair of wings positioned either side of the continuous surface.

3. The car seat (1) of claim 1 or claim 2, in which the headrest (9) is mounted through the pivoting mounting (8) at an upper end of the headrest (9), and the backrest (14) extends from an opposite, lower end of the headrest (9).

4. The car seat (1) of claim 3, in which the backrest (14) has an upper end at which it joins the headrest (9), and an opposite, lower end furthest from the backrest (14).

5. The car seat (1) of claim 4, comprising a restraint for the infant child comprising a plurality of straps and buckles, including a crotch strap extending from adjacent to the lower end of the backrest (14).

6. The car seat (1) of any preceding claim, comprising an indexing mechanism which allows the sliding member (7) to lock at spaced apart discrete points.

7. The car seat (1) of any preceding claim, in which the wedge (16) has a flat surface which abuts the backrest (14) and a curved surface which abuts the upper surface (4).

8. The car seat (1) of any preceding claim, in which in at least one position of the sliding member (7), the flat surface of the wedge (16) extends past the lower end of the backrest (14) to provide an extension to the continuous surface.

9. The car seat (1) of any preceding claim, having a first state in which the wedge (16) is fitted between the backrest (14) and the upper surface (4) and a second state where the wedge (16) is not fitted between the backrest (14) and the upper surface (4), in which case the backrest (14) will lay against the upper surface (4).

## Patentansprüche

1. Fahrzeugsitz (1) für Kleinkinder, umfassend
einen Körper, der Wände (2) und eine Basis (3) aufweist, wobei die Wände eine obere Oberfläche (4) der Basis (3) umgeben;
ein Gleitelement (7), das im Verhältnis zu der oberen Oberfläche (4) gleiten kann;
eine Kopfstützenbaugruppe (6), die eine Kopfstütze (9), die durch eine Schwenkmontagevorrichtung (8) an dem Gleitelement (7) montiert ist, und eine Rückenlehne (14), die sich von der Kopfstütze (9) aus erstreckt, umfasst, wobei die Kopfstütze (9) und die Rückenlehne (14) jeweils eine Oberfläche (10, 15) aufweisen, wobei die Oberflächen (10, 15) eine durchgehende Oberfläche zum Hinlegen des Kleinkindes bilden;
**dadurch gekennzeichnet, dass** er ferner umfasst
einen Keil (16), der eingerichtet ist, um zwischen die Rückenlehne (14) und die obere Oberfläche (4) zu passen, wobei der Keil (16), wenn er zwischen der Rückenlehne (14) und der oberen Oberfläche (4) eingepasst ist, während das Gleitelement (7) auf der oberen Oberfläche (4) gleitet, die Kopfstützenbaugruppe (6) antreibt, damit sie um die Schwenkmontagevorrichtung (8) herum schwenkt, um eine Neigung der durchgehenden Oberfläche (10, 15) zu ändern.

2. Fahrzeugsitz (1) nach Anspruch 1, wobei die Kopfstütze (9) ein Paar Flügel umfasst, die auf beiden Seiten der durchgehenden Oberfläche positioniert sind.

3. Fahrzeugsitz (1) nach Anspruch 1 oder Anspruch 2, wobei die Kopfstütze (9) durch die Schwenkmontagevorrichtung (8) hindurch an einem oberen Ende der Kopfstütze (9) montiert ist, und sich die Rückenlehne (14) von einem gegenüberliegenden unteren Ende der Kopfstütze (9) aus erstreckt.

4. Fahrzeugsitz (1) nach Anspruch 3, wobei die Rückenlehne (14) ein oberes Ende, an dem sie auf die Kopfstütze (9) trifft, und ein gegenüberliegendes unteres Ende, das am weitesten von der Rückenlehne (14) entfernt ist, aufweist.

5. Fahrzeugsitz (1) nach Anspruch 4, umfassend eine Haltevorrichtung für das Kleinkind, die eine Vielzahl von Gurten und Schnallen umfasst, die einen Schrittgurt umfassen, der sich von der Nähe des unteren Endes der Rückenlehne (14) aus erstreckt.

6. Fahrzeugsitz (1) nach einem der vorhergehenden Ansprüche, umfassend einen Rastmechanismus, der es dem Gleitelement (7) ermöglicht, an beabstandeten getrennten Punkten festgestellt zu werden.

7. Fahrzeugsitz (1) nach einem der vorhergehenden Ansprüche, wobei der Keil (16) eine flache Oberfläche, die an der Rückenlehne (14) zum Anstoß kommt, und eine gekrümmte Oberfläche, die an der oberen Oberfläche (4) zum Anstoß kommt, aufweist.

8. Fahrzeugsitz (1) nach einem der vorhergehenden Ansprüche, wobei sich in mindestens einer Position des Gleitelements (7) die flache Oberfläche des Keils (16) über das untere Ende der Rückenlehne (14) hinweg erstreckt, um für die durchgehende Oberfläche eine Verlängerung bereitzustellen.

9. Fahrzeugsitz (1) nach einem der vorhergehenden Ansprüche, der einen ersten Zustand, in dem der Keil (16) zwischen der Rückenlehne (14) und der oberen Oberfläche (4) eingepasst ist, und einen zweiten Zustand, in dem der Keil (16) nicht zwischen der Rückenlehne (14) und der oberen Oberfläche (4) eingepasst ist, aufweist, in welchem Fall die Rückenlehne (14) an der oberen Oberfläche (4) anliegt.

## Revendications

1. Siège de voiture (1) pour bébé, comprenant
un corps présentant des parois (2) et une base (3), les parois (2) entourant une surface supérieure (4) de la base (3) ;
un élément coulissant (7) pouvant coulisser par rapport à la surface supérieure (4) ;
un ensemble repose-tête (6) comprenant un repose-tête (9) monté à travers un montage à pivot (8) sur l'élément coulissant (7) et un dossier (14) s'étendant à partir du repose-tête (9), le repose-tête (9) et le dossier (14) ayant chacun une surface (10, 15), les surfaces (10, 15) formant une surface continue pour coucher le bébé ;
**caractérisé en ce qu'**il comprend en outre
une cale (16) agencée pour s'adapter entre le dossier (14) et la surface supérieure (4), dans lequel, quand elle s'adapte entre le dossier (14) et la surface supérieure (4), lorsque l'élément coulissant (7) coulisse sur la surface supérieure (4), la cale (16) entraîne l'ensemble repose-tête (6) à pivoter autour du montage à pivot (8) de façon à changer une inclinaison de la surface continue (10, 15).

2. Siège de voiture (1) selon la revendication 1, dans lequel le repose-tête (9) comprend une paire d'ailes positionnées des deux côtés de la surface continue.

3. Siège de voiture (1) selon la revendication 1 ou la revendication 2, dans lequel le repose-tête (9) est monté à travers le montage à pivot (8) à une extrémité supérieure du repose-tête (9), et le dossier (14) s'étend à partir d'une extrémité inférieure, opposée, du repose-tête (9).

4. Siège de voiture (1) selon la revendication 3, dans lequel le dossier (14) présente une extrémité supérieure à laquelle il rejoint le repose-tête (9), et une extrémité inférieure, opposée, la plus éloignée du dossier (14).

5. Siège de voiture (1) selon la revendication 4, comprenant un dispositif de retenue pour le bébé comprenant une pluralité de sangles et de boucles, comprenant une sangle d'entrejambe s'étendant à partir d'un endroit adjacent à l'extrémité inférieure du dossier (14).

6. Siège de voiture (1) selon l'une quelconque des revendications précédentes, comprenant un mécanisme d'indexation qui permet à l'élément coulissant (7) de se bloquer en des points discrets espacés.

7. Siège de voiture (1) selon l'une quelconque des revendications précédentes, dans lequel la cale (16) présente une surface plate qui vient en butée contre le dossier (14) et une surface courbe qui vient en butée contre la surface supérieure (4).

8. Siège de voiture (1) selon l'une quelconque des revendications précédentes, dans lequel dans au moins une position de l'élément coulissant (7), la surface plate de la cale (16) s'étend au-delà de l'extrémité inférieure du dossier (14) pour fournir un prolongement à la surface continue.

9. Siège de voiture (1) selon l'une quelconque des revendications précédentes, présentant un premier état dans lequel la cale (16) s'adapte entre le dossier (14) et la surface supérieure (4) et un deuxième état dans lequel la cale (16) ne s'adapte pas entre le dossier (14) et la surface supérieure (4), dans quel cas le dossier (14) reposera sur la surface supérieure (4).
